# EUROPEAN PATENT SPECIFICATION

(11) **EP 1 309 975 B1**
(45) Date of publication and mention of the grant of the patent: **13.04.2005**
(21) Application number: 01958047.1
(22) Date of filing: 02.08.2001
(51) Int. Cl.: H01B 12/06

(54) **SUPERCONDUCTING CABLE**
SUPRALEITENDES KABEL
CABLE SUPRACONDUCTEUR

(30) Priority: 14.08.2000 EP 00202854; 15.08.2000 US 225308 P
(43) Date of publication of application: 14.05.2003
(73) Proprietor: Pirelli & C. S.p.A., 20123 Milano (IT)
(72) Inventor: MELE, Renata, I/20122 Milano (IT)
(74) Representative: Riccardi, Elisa
(86) International application number: PCT/EP2001/008950
(87) International publication number: WO 2002/015203

(56) References cited:
- WO-A-00/39813
- US-A- 3 864 508
- US-A- 6 034 588

## Description

The present invention relates in general to superconducting cables, that is to say cables intended for transporting electric current in so-called superconductivity conditions, namely in conditions of almost zero electrical resistance in the regime of transportation of direct current.

More in particular, the invention relates to a method for reducing alternating current (AC) losses in a superconducting conductor element subjected to an external magnetic field and through which a current flows. Furthermore, the invention relates to a superconducting conductor element. Furthermore, the invention relates to a superconducting phase element. Furthermore, the invention relates to a warm dielectric superconducting cable.

In the following description and in the following claims, the expression "superconducting conductor element" is meant to indicate the electrically active portion of a superconducting cable, comprising a support and at least one layer of superconducting material, intended for transporting the phase electric current or, in the case of a three-phase current, each phase current.

The expression "superconducting phase element" is meant to indicate each component of a superconducting cable associated with the or each phase, comprising a superconducting conductor element and the respective electrical and thermal insulations.

The expression "warm dielectric" (WD) is meant to indicate a structure of coaxial layers of a superconducting phase element comprising, essentially, a tubular axial support and at least one layer comprising superconducting material (that is to say a superconducting conductor element), a cryostat and a dielectric, wherein a fluid, typically liquid nitrogen, flows within the support element for cooling the superconducting material below its critical temperature.

The expression "superconducting material" is meant to indicate a material, as for example special niobium-titanium alloys, or ceramics based on mixed oxides of copper, barium and yttrium (YBCO) or of gadolinium, samarium or other rare earth (REBCO), or of bismuth, lead, strontium, calcium, copper, thallium and mercury (BSCCO), one of which phases has, below a certain temperature defined as critical temperature (T_{c}), an almost zero resistivity, in the regime of transportation of direct current.

The superconducting material is commonly used in the form of tapes wound around a substantially tubular support element. Tapes containing a film of superconducting material (YBCO or REBCO) supported by a steel tape, optionally coated with one or more layers of oxide, and tapes wherein filaments of superconducting material (BSCCO) are embedded in a metallic matrix are well-known. The present description and the attached claims refer to both types of tape with the expression "tapes comprising superconducting material".

The expression "transport current" is meant to indicate a current flowing in a tape comprising superconducting material, in a superconducting conductor element, in a superconducting phase element, or in a superconducting cable, according to the circumstances.

In the field of superconducting cables, a particularly important problem is that of minimizing the AC losses.

The losses in a superconducting material are essentially of a hysteretic nature, due to the intrinsic dissipation of the superconducting material caused by the penetration of a magnetic field within the superconducting material itself.

The losses of a hysteretic nature are added to the losses due to eddy currents, that is to say ohmic losses of the currents which are induced, by variable magnetic fields, in the metallic areas of the superconducting cable in general.

A first magnetic field causing losses is that generated by the transport current itself. This magnetic field is commonly referred to as "self-field".

External magnetic fields of particular interest to practical applications of superconducting cables are those due to the presence of the other phases in a three-phase or polyphase cable.

The expression "polyphase cable" is meant to indicate a cable wherein the current of each phase, in a single phase or three-phase current system, is distributed among various superconducting phase elements.

Other external magnetic fields of particular applicative interest are due to the presence of a generator, an engine or a current limiter near to a superconducting cable.

In order to eliminate or substantially reduce the losses due to external magnetic fields, cold dielectric (CD) superconducting cables are well known. In each superconducting phase element, these kinds of superconducting cables have at least one return layer comprising superconducting material, coaxial to that intended for transporting the current, and shielding the latter from external magnetic fields. Such cables however have rather high initial costs due to the practically double quantity of superconducting material used compared to warm dielectric cables.

In warm dielectric superconducting cables, with which the present invention is especially concerned, however, the superconducting material for transporting the current is not shielded.

The effect of magnetic coupling between the phases of a three-phase warm dielectric superconducting cable on the losses in a superconducting conductor element through which a transport current flows has been studied in the paper of J. O. Willis et al., "Single and Multi-Phase ac Losses in HTS Prototype Power Transmission Conductors", IEEE TRANSACTIONS ON APPLIED SUPERCONDUCTIVITY, Volume 9, June 1999, page 778.

The results, indicated therein, of the measurements carried out indicate that the losses in three-phase configuration, that is to say the total losses in the presence of a transport current and of the magnetic field generated by the current of the other two phases, flowing in resistive conductors, are greater than the sum of the losses due to the sole transport current (single-phase configuration) and the losses due to the sole current in the conductors of the other phases (two-phase configuration), or, briefly, that the AC losses have a non-linear nature.

According to this paper, furthermore, the losses in the single-phase configuration decrease with increasing critical current of the superconducting conductor element.

The expression "critical current (density)" is meant to indicate the current (density) that generates at the ends of a superconducting conductor element an electric field equal to 1 mV/cm.

In the article by K. H. Müller, "Self-field hysteresis loss in periodically arranged superconducting tapes", Phisica C 289, pages 123-130, 1997, an analytical calculation of the magnetic field distribution, of the current distribution and of the self-field losses in two configurations of superconducting strips through which a transport current flows is presented.

The configurations studied are presented as an idealized model of the arrangement of tapes comprising superconducting material in superconducting conductor elements of superconducting cables.

More in particular, the z-stack configuration is studied, i.e. an infinite series of strips placed with the wide faces adjacent and spaced out and the x-array configuration, i.e. an infinite series of strips placed with the narrow faces adjacent and spaced out.

Such a paper concludes that the self-field AC losses per strip decrease with decreasing gap between the strips and are minimal with a zero gap.

In this regard, the Applicant observes that a zero gap is an ideal condition, difficult to put into practice. In fact, for technological reasons, in the machine production of superconducting conductor elements it is exceedingly difficult to wind the superconducting tapes with continuity. Furthermore, in the case of metallic matrix/multifilament tapes, as described in further detail below in the present description, even by reducing to zero the distance between the tapes, a gap still remains (in the order of about 0.6 mm) between the superconducting material of adjacent tapes, due to the presence of an edge area of the metallic matrix which is free of superconducting filaments.

The Applicant has now found that an increase in the gap between the superconducting material of adjacent tapes has the effect of reducing the total AC losses in the presence of a transport current and of an external magnetic field, in particular due to the magnetic coupling between the phase elements in a three-phase warm dielectric superconducting cable.

Besides reducing losses, the spacing of the superconducting tapes according to the present invention has the further advantage of facilitating machine production of the superconducting phase element.

In a first aspect, the invention relates to a method for reducing the AC losses in a superconducting conductor element subjected to an external magnetic field and through which a current flows, comprising the steps of:
(a) providing a substantially tubular support element,
(b) arranging a plurality of tapes comprising superconducting material in at least one layer around the support element, wherein adjacent tapes of each layer are maintained at such a mutual distance that the gap between the superconducting material of adjacent tapes is not smaller than a predetermined minimum value.

In the practice of the present invention, the value of the gap between the superconducting material of adjacent tapes is chosen by taking into account the opposing requirements of maximizing it to reduce the AC losses and of minimizing it to increase the quantity of transport current, with the same geometry of the superconducting conductor element.

Preferably, the predetermined minimum value is 1.2 millimetres.

More preferably, the minimum value of the gap is 1.4 millimetres, even more preferably it is 2 millimetres.

In a second aspect, the invention relates to a superconducting conductor element, comprising at least one layer of tapes comprising superconducting material around a substantially tubular support element, the tapes of each layer being mutually spaced out, characterised in that the tapes of each layer are at such a mutual distance that the gap between the superconducting material of adjacent tapes is not smaller than 1.2 millimetres.

Preferably, the tapes comprising a superconducting material are arranged in a number of layers between 2 and 10.

Between adjacent tapes a layer of a material suitable for facilitating the sliding between the layers of tapes may be placed, for example carbon paper or TYVEK^{TM}.

The gap between the superconducting material of the different pairs of adjacent tapes may be constant.

Alternatively, the gap between the superconducting material of adjacent tapes may vary from one layer to another.

Preferably, the tapes comprising superconducting material of each layer are helically wound around the support element, at a respective predetermined winding angle - with respect to the longitudinal direction of the support element - preferably between 5° and 50°, more preferably between 8° and 40°. This measure allows for a reduction in any possible mechanical stress of the tapes themselves.

The gap in each layer may in this case be chosen, from the ranges of values specified above, in such a way as to minimize the difference in critical current between the various layers of tapes comprising superconducting material.

The tapes comprising superconducting material of at least two adjacent tapes are helically wound in opposite directions.

In a first embodiment, the tapes comprising superconducting material are of metallic matrix/multifilament type, as are obtained by the well-known "Powder-in-tube" process and as explained in more detail herebelow.

In this case, as filaments of superconducting material those defined above with the initials BSCCO can be conveniently used.

Preferably, the superconducting material is the mixed oxide called BSCCO-2223 or Bi-2223.

The metallic matrix is preferably made from silver, gold or suitable alloys thereof with other metals.

The tapes can be further partially or totally coated with a metal layer, preferably of steel or a copper-beryllium alloy.

In an alternative embodiment, the tapes comprise a superconducting material in the form of a film, for example those defined above with the initials YBCO or REBCO. These, for example, are prepared as described in US 5,741,377 to Martin Marietta Co.

In a third aspect, the invention relates to a warm dielectric superconducting phase element comprising a superconducting conductor element as described above, a cryostat coaxially external to it, and a dielectric coaxially external to the cryostat.

Preferably, the superconducting phase element of the invention is cooled down by means of a suitable pressurized or undercooled cooling fluid, in order to ensure the heat exchange necessary for its operation and to guarantee that a temperature suitably below the critical temperature of the superconducting material is maintained, even for a phase element of a long length.

During its flow, in fact, the cooling fluid is simultaneously subjected to progressive heating, as a result of the heat released as a consequence of the losses of the various components, and to a progressive loss in pressure, due to hydraulic losses while flowing through the phase element and to the more or less turbulent flow of the fluid itself.

Preferably, the superconducting material is of the so-called high temperature type (T_{c} in the order of about 100K) and is cooled down to a temperature between about 63K and 90K.

Such cooling if preferably achieved using liquid nitrogen as the cooling fluid, at a working pressure between 5 and 25 bar.

Preferably, the cooling fluid is circulated within the substantially tubular support element.

In a fourth aspect, the invention relates to a warm dielectric superconducting cable comprising at least one superconducting phase element as described.

Preferably, said superconducting cable is a three-phase cable.

Further features and advantages of the present invention will appear more clearly from the following detailed description of an embodiment thereof, given hereinbelow, with reference to the attached drawings. In the drawings:
- Figure 1 shows a perspective view in partial cross-section of a three-phase warm dielectric superconducting cable, according to an embodiment of the present invention;
- Figure 2 shows a perspective view, on an enlarged scale and in partial cross-section, of a superconducting conductor element of the cable of Figure 1;
- Figure 3 shows, on an even more enlarged scale, a diagrammatic partial cross-section through the superconducting conductor element of Figure 2; and
- Figures 4 and 5 show the results of experimental measurements.

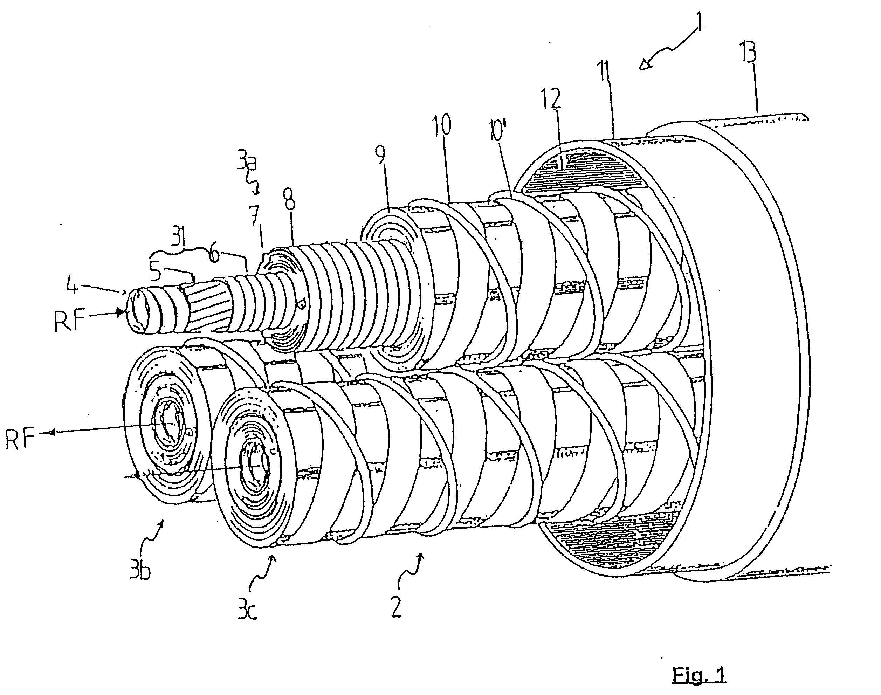

With reference to Figure 1, a three-phase warm dielectric superconducting cable 1 according to the present invention comprises a superconducting core, globally indicated by 2, comprising a plurality of superconducting phase elements 3, indicated by 3a, 3b, 3c, housed, preferably loosely, within a tubular containing case 11, for example of a metallic material, such as steel, copper, aluminium or the like.

The tubular containing case 11 is preferably formed from a tape wound in tubular form and longitudinally welded, or from an extruded tube or similar. Whenever the demands for flexibility of the cable so require, this may be corrugated.

Each of the phase elements 3 comprises a superconducting conductor element 31 comprising a substantially tubular support element 4 and, coaxially upon it, at least one layer 5 comprising superconducting material (described in detail below).

Each of the phase elements 3 further comprises, coaxially external to the superconducting conductor element 31: a cryostat made up of a first corrugated tube 6, a thermal insulator 7 and a second corrugated tube 8; a dielectric 9; a metallic shield 10; and spacers 10'.

The cryostat 6-8, having the purpose of minimizing outward thermal dispersion, comprises a thermal insulator 7 formed, for example, by a plurality of superimposed layers, and at least one protection sheath.

A cryostat, well known in the art, is described for example in an article by N. Kelly et al., Proc. Of IEEE TRANSACTIONS ON POWER DELIVERY, Dist. Conference, New Orleans, April 1999.

More in particular, the thermal insulator 7 is, for example, made up of several surface-metallized tapes (for example some tens) made from a polyester resin, known in the field as "thermal super-insulator", loosely wound, possibly with the aid of interposed spacers (not shown).

Furthermore, cable 1 comprises a cooling circuit for circulating a cooling fluid suitable for cooling the superconducting material to a temperature suitably below its critical temperature. In the cable of Figure 1, such superconducting material is preferably of high temperature type, that is to say having a critical temperature T_{c} in the order of about 110K.

The above-mentioned cooling circuit comprises suitable pumping means, well-known per se and therefore not shown, intended for supplying a suitable cooling fluid, for example liquid nitrogen, at a temperature typically between 65 and 90K, within the substantially tubular support elements 4 of each of the superconducting conductor elements 31, as indicated by arrows RF.

In the case that the dielectric 9 is of impregnated type, the tubular containing case 11 may be filled with gas or oil 12 at a pressure, for example, of 13.8 bars, in order to lubricate and increase the performance of dielectric 9.

The tubular containing case 11 is furthermore preferably coated with an external sheath 13, for example made of polyethylene.

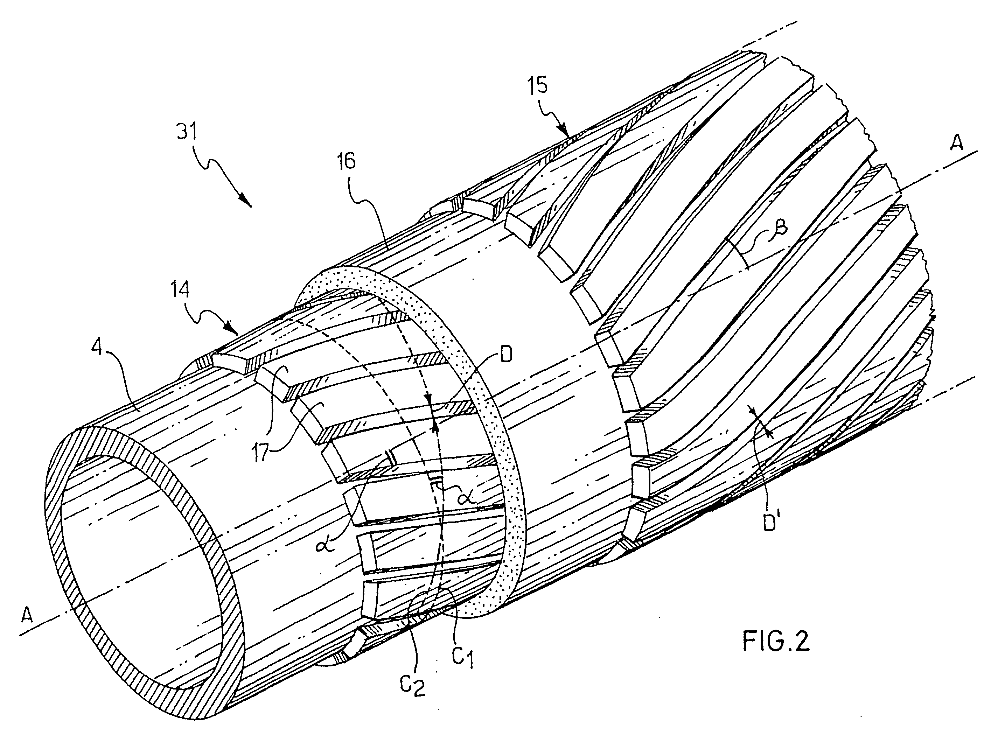

Figure 2 shows the superconducting conductor element 31, in perspective and not to scale, wherein the support element 4 is schematized.

Layers 14 and 15, just like any other superconducting layer that may be present, are preferably separated by a layer 16 of a material suitable for promoting the sliding between the layers, for example carbon paper or TYVEK^{TM}.

Each superconducting layer 14, 15 is in turn made up of a plurality of tapes 17 helically wound according to a respective winding angle α, β. The winding angles of each superconducting layer may vary as described above.

The winding directions and angles of the tapes 17 of the various layers may be equal or different, but preferably at least two adjacent layers are provided comprising tapes wound in opposite directions, as superconducting layers 14, 15 shown in Figure 2.

The tapes 17 of a same superconducting layer are reciprocally spaced out. This distance has been indicated by D for the tapes 17 of superconducting layer 14 and by D' for the tapes 17 of superconducting layer 15.

In order to be unaffected by the winding angle of the tapes 17, the distance D (and D') is indicated in the cross direction of the tapes themselves, i.e. on the circumference C₂ illustrated, which forms together with the circumference C₁ illustrated, perpendicular to the axis A-A of the phase element, an angle α equal to the winding angle of the tapes 17.

The distance between adjacent tapes may be constant or vary from one layer to the other.

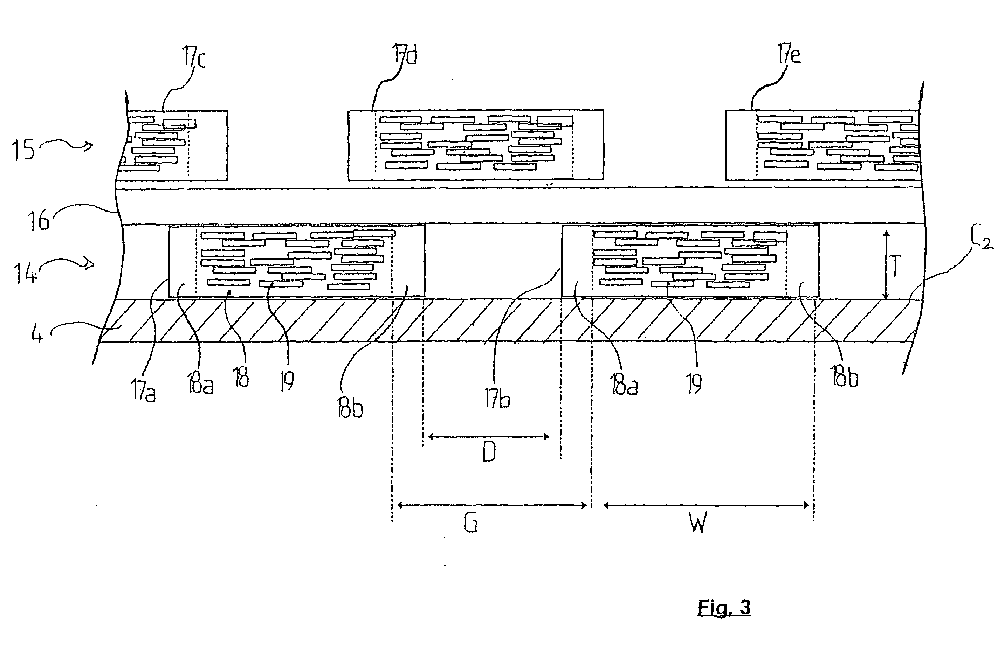

Figure 3 shows a diagrammatic cross-section of the superconducting conductor element 31, taken along a portion of circumference C₂ in Figure 2. The portion of circumference is illustrated as rectilinear in virtue of the high ratio between the transverse size (width W) of each tape 17a-17e and the radius of curvature of the support element 4. In Figure 3, thickness T of the tapes is also indicated.

Preferably, the thickness T is much less than the width W, that is to say that the tapes 17 comprising superconducting material have a high aspect ratio.

The width of the tapes 17 of each layer 14, 15 may, furthermore, be the same or different.

The tapes 17a-17b of the embodiment shown in Figure 3 are of metallic matrix/multifilament type, obtained by the process known as "Powder-in-Tube" (PIT). This process essentially involves pressing a powder precursor of the superconducting material, for example the above-mentioned BSCCO material, in a tube made of silver, silver alloy or other noble metal. The tube is subsequently deformed by drawing or rolling and thermally treated to convert the powder precursor into the superconducting material.

The resulting section, which can be seen from Figure 3, appears as substantially rectangular and comprises a metallic "matrix" 18, in the internal portion whereof the superconducting material 19 is concentrated in the form of a plurality of filaments of a substantially rectangular cross-section and distributed in a substantially irregular manner.

Tapes made in this way, in which the superconducting material is the above-mentioned BSCCO material and the metallic matrix is of silver or alloys thereof, are well-known in the art as BSCCO/Ag tapes.

As can be appreciated, in side areas of the tapes 17 two edges 18a, 18b are formed of a metallic matrix substantially free of superconducting filaments 19.

The superconducting material 19 of two adjacent tapes 17, for example of the tapes 17a, 17b shown, are therefore spaced out by a gap indicated by G, greater than the above-mentioned distance D.

The tapes 17 may, furthermore, be partially or totally coated with a metallic layer (not shown), for example of steel or a copper-beryllium alloy.

Similar considerations apply for a superconducting material of YBCO or REBCO type, as defined above.

With reference to what has been described hereinabove, some examples will be provided below, by way of non-limitative indication, suitable to illustrate the behaviour of the AC losses in an embodiment of a superconducting conductor element according to the invention and of a superconducting conductor element according to the prior art.

### EXAMPLE 1

According to an embodiment of the invention, a prototype of a superconducting conductor element was made.

The superconducting conductor element comprised a tubular support having a diameter of 30.2 millimetres, upon which 63 BSCCO-2223/Ag tapes, supplied by the American Superconductor Corporation, Westborough, MA, U.S.A., were wound by hand in four layers.

More in particular, there were 15, 17, 17 and 14 tapes, helically wound at winding angles of -29.5°, -13°, 13° and 38°, respectively from the innermost layer to the outermost layer.

The tapes used, of the type marketed as "Wide", had a width of 4.1±0.1 mm and a silver matrix thickness of 0.215 mm, and were coated on the main faces with a steel sheet, to a total thickness of 0.32 mm.

The distance between adjacent tapes of each layer, measured as defined above, was of 1.4 mm. Such a distance, considering the transverse size of the metallic edges of the silver matrix, corresponded to a gap between the superconducting material of adjacent tapes, as defined above, of 2 millimetres.

The average value of the critical current per tape, as measured on each tape, was of 95.5 A. The total critical current calculated as the product between the number of tapes and the critical current per tape was of about 6000 A. The total critical current measured turned out to be 4750±100 A, with a degradation with respect to the calculated value (ΔI_{c}/I_{c}) of -21%.

The current distribution resulted to be uniform among the layers.

AC losses measurements have been carried out using a temperature-difference calorimeter in the manner described in the above-cited paper by J.O. Willis et al, to which reference is made for all details.

Loss measurements in three-phase configuration have been carried out as described in the above-mentioned publication. In particular, the current was caused to flow in the phase comprised of the superconducting conductor element and also in two other phases comprised of normal (resistive) conductor elements.

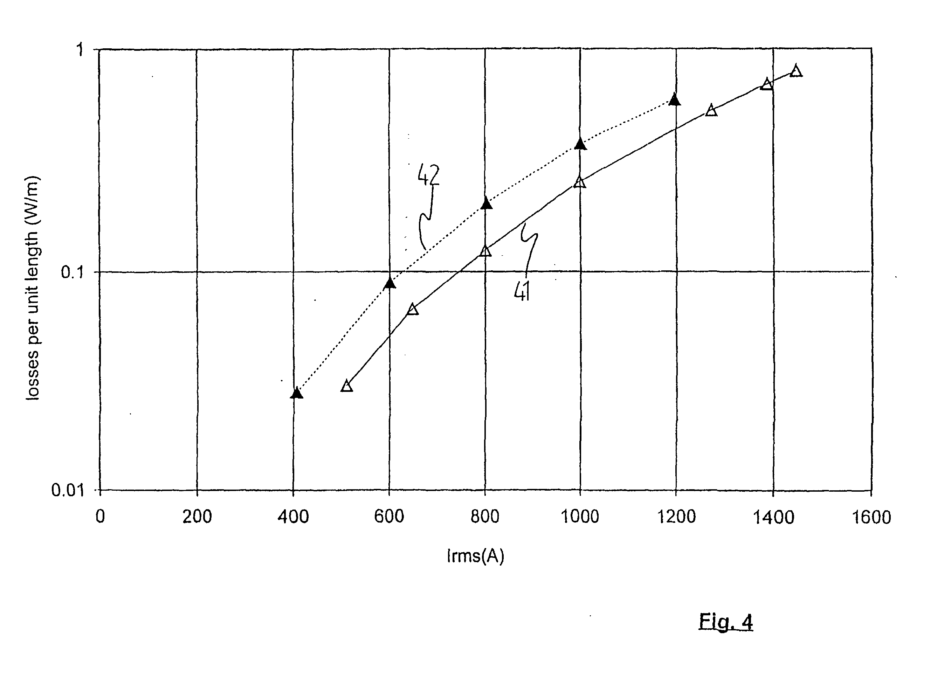

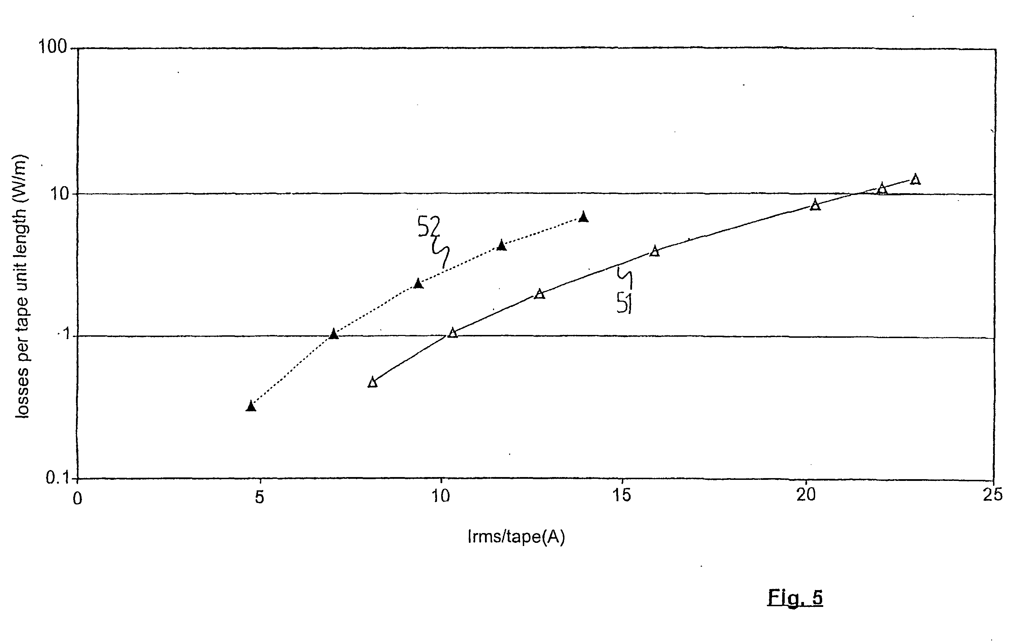

Figures 4 and 5 graphically show the measurement results. Figure 4 shows the patterns of the total losses within the superconducting conductor element as a function of the root-mean-square value of the transport current in the superconducting conductor element, while Figure 5 shows the patterns of the losses per unit length of the tape comprising superconducting material as a function of the root-mean-square value of the transport current per tape.

More in particular, lines 41 and 51 illustrate the measured values and the approximate curves of the losses in three-phase configuration, at a temperature of 76K and a frequency of 60Hz.

### EXAMPLE 2 - Comparison

With the purpose of comparing the AC losses, a superconducting conductor element was made, comprising a tubular support with a diameter of 30.2 mm, upon which 86 BSCCO-2223/Ag tapes, supplied by the American Superconductor Corporation, Westborough, MA, U.S.A., were wound, by hand and in four layers. There were 20, 23, 23 and 20 tapes, helically wound at winding angles equal to those of the Example 1.

The distance between adjacent tapes of each layer, measured perpendicularly to the longitudinal dimension of the tapes, was of 0.1 mm. Such a distance, considering the transverse size of the metallic edge of the silver matrix, corresponded to a gap, as defined above, of 0.7 mm.

The tapes used had a width of 4.0±0.1 mm and a silver matrix thickness of 0.205 mm and were coated on the main faces with a steel sheet, to a total thickness of 0.32 mm.

The average value of the critical current per tape, as extrapolated from sample measurements, was of 76.5 A. The calculated total critical current was of about 6600 A. The measured total critical current turned out to be 5400±500 A, with a degradation with respect to the calculated value of -18%.

The current distribution turned out to be uniform among the layers.

Also for this superconducting conductor element, AC loss measurements were carried out using the temperature-difference calorimeter in three-phase configuration as described in Example 1.

In Figures 4 and 5, lines 42 and 52 illustrate the measured values and the approximate curves of the losses in three-phase configuration, at a temperature of 76K and a frequency of 60Hz.

Table I below summarizes the parameters of the two prototypes of Examples 1 and 2.

**TABLE I**

| PARAMETER | Example 1 (Invention) | Example 2 (Comparison) |
|---|---|---|
| Diameter of support element (mm) | 30.2 | 30.2 |
| Winding angles | -29.5°/-13°/ 13°/38° | -29.5°/-13°/ 13°/38° |
| Number of layers | 4 | 4 |
| Measured total I_{c} (A) ΔI_{c}/I_{c} | 4750±100 -21% | 5400±500 -18% |
| Tape width (mm)/thickness (mm) | 4.1/0.32 | 4.0/0.32 |
| Number of tapes: total and per layer | 63 15/17/17/14 | 86 20/23/23/20 |
| Average I_{c} per tape (A) | 95.5 | 76.5 |
| Calculated total I_{c} (A) | 6000 | 6600 |
| Distance between tapes (mm) | 1.4 | 0.1 |
| Gap (mm) | 2 | 0.7 |

Taking into account that the parameters considered to be essential in order to evaluate the AC losses are the following: diameter of the support element, winding angles of the layers, measured total critical current and thickness of the layers, it can be seen that the superconducting conductor elements of Table I exhibited characteristics that, to the above mentioned purposes, are substantially similar.

They differed remarkably in the distance between the tapes and, therefore, in the gap between the superconducting material of adjacent tapes. Furthermore they also differed, to a lower degree, in the values of critical current. In particular, even though the critical current per tape of the element according to the invention is slightly higher, its total critical current, both measured and calculated, was slightly lower.

From an analysis of the plots of Figures 4 and 5 it can be appreciated that the losses in three-phase configuration of the element of Example 1, with a greater gap, turned out to be notably lower than those of the element of Example 2, with a smaller gap.

The small difference in the total critical current does not account for this behaviour of the losses, as it could at the most have the effect of increasing the losses in the sample of Example 1 with respect to those of the sample of Example 2. It is in fact well known that the AC loss component due to self-field decreases with increasing total critical current - see, for example, the cited paper by J. O. Willis et al., which also indicates that the losses in three-phase configuration depend only slightly on the total critical current.

This behaviour of the AC losses in three-phase configuration is therefore to be ascribed to the change in the gap, the losses turning out to be inversely related to it, in contrast with what suggested by the theory developed in the cited article by K. H. Muller.

By virtue of the remarkably superior performance of the superconducting conductor element with a greater gap (Example 1) in three-phase configuration, such a superconducting conductor element according to the invention may advantageously be used in various configurations of a superconducting cable.

In fact, the measuring conditions in three-phase configuration followed in the Examples can be compared not only to the working conditions of each superconducting phase element in a three-phase cable, but also to the working conditions in a single-phase cable subjected to external magnetic fields, such as for example a single-phase cable placed near to a generator, an engine, a current limiter etc.

## Claims

1. Method for reducing AC losses in a superconducting conductor element (31) subjected to an external magnetic field and through which a current flows, comprising the steps of:
(a) providing a substantially tubular support element (4),
(b) arranging a plurality of tapes (17) comprising superconducting material in at least one layer (5; 14, 15) around the support element (4), wherein the tapes (17) of each layer are maintained at such a mutual distance (D) that the gap (G) between the superconducting material (19) of adjacent tapes (17a, 17b) is not smaller than a predetermined minimum value.

2. Method according to claim 1, **characterised in that** the predetermined minimum value is 1.2 millimetres.

3. Method according to claim 2, **characterised in that** the predetermined minimum value is 1.4 millimetres.

4. Method according to claim 3, **characterised in that** the predetermined minimum value is 2 millimetres.

5. Method according to any one of the previous claims, **characterised in that** the tapes (17) comprising superconducting material are arranged in a number of layers between 2 and 10.

6. Method according to claim 5, **characterised in that** the step (b) of arranging the tapes (17) is carried out by helically winding the tapes (17) of each layer (14, 15) around the support element (4), the tapes (17) of at least two adjacent layers (14, 15) being wound in opposite directions.

7. Method according to any one of the previous claim, **characterised in that** the tapes (17) comprising superconducting material are of metallic matrix/multifilament type.

8. Method according to claim 7, **characterised in that** the superconducting material is of BSCCO type.

9. Superconducting conductor element (31), comprising at least one layer (5; 14, 15) of tapes (17) comprising superconducting material arranged around a substantially tubular support element (4), the tapes (17) of each layer (5, 14, 15) being mutually spaced out, **characterised in that** the tapes (17) have such a mutual distance (D, D') that the gap (G) between the superconducting material (19) of adjacent tapes (17a, 17b) is not smaller than 1.2 millimetres.

10. Superconducting conductor element (31) according to claim 9, **characterised in that** the gap (G) has a predetermined minimum value of 1.4 millimetres.

11. Superconducting conductor element according to claim 10, **characterised in that** the gap (G) has a predetermined minimum value of 2 millimetres.

12. Superconducting conductor element according to any one of claims 9 to 11, **characterised by** comprising 2 to 10 layers (14, 15) of tapes (17) comprising superconducting material.

13. Superconducting conductor element according to claim 12, **characterised in that** the tapes (17) of each layer (14, 15) are helically wound around the support element (4), the tapes (17) of at least two adjacent layers (14, 15) being wound in opposite directions.

14. Superconducting conductor element according to any one of claims 9 to 13, **characterised in that** the tapes (17) comprising superconducting material are of metallic matrix/multifilament type.

15. Superconducting condutor element according to claim 14, **characterised in that** the superconducting material is of BSCCO type.

16. Warm dielectric superconducting phase element (3a, 3b, 3c) comprising a superconducting conductor element (31) according to any one of claims 9 to 15.

17. Warm dielectric superconducting cable (1) comprising at least one superconducting phase element (3a, 3b, 3c) according to claim 16.

18. Superconducting cable (1), according to claim 17, **characterised by** being a three-phase cable.

## Patentansprüche

1. Verfahren zum Verringern von Wechselstromverlusten in einem supraleitenden Leiterelement (31), das einem externen Magnetfeld ausgesetzt ist, und durch welches ein Strom fließt, mit folgenden Schritten
a) Bereitstellung eines im wesentlichen rohrförmigen Halterungselements (4),
b) Anordnen mehrerer Bänder (17), die supraleitendes Material in zumindest einer Schicht (5; 14, 15) aufweisen, um das Halterungselement (4) herum, wobei die Bänder (17) jeder Schicht auf einer derartigen gegenseitigen Entfernung (D) gehaltert werden, dass der Spalt (G) zwischen dem supraleitenden Material (19) benachbarter Bänder (17a, 17b) nicht kleiner ist als ein vorbestimmter Minimalwert.

2. Verfahren nach Anspruch 1, **dadurch gekennzeichnet, dass** der vorbestimmte Minimalwert 1,2 mm beträgt.

3. Verfahren nach Anspruch 2, **dadurch gekennzeichnet, dass** der vorbestimmte Minimalwert 1,4 mm beträgt.

4. Verfahren nach Anspruch 3, **dadurch gekennzeichnet, dass** der vorbestimmte Minimalwert 2 mm beträgt.

5. Verfahren nach einem der voranstehenden Ansprüche, **dadurch gekennzeichnet, dass** die Bänder (17), die supraleitendes Material aufweisen, in einer Anzahl von Schichten zwischen zwei und zehn vorgesehen sind.

6. Verfahren nach Anspruch 5, **dadurch gekennzeichnet, dass** der Schritt (b) des Anordnens der Bänder (17) so durchgeführt wird, dass helixförmig die Bänder (17) jeder Schicht (14, 15) um das Halterungselement (4) gewickelt werden, wobei die Bänder (17) von zumindest zwei benachbarten Schichten (14, 15) in entgegengesetzten Richtungen gewickelt werden.

7. Verfahren nach einem der voranstehenden Ansprüche, **dadurch gekennzeichnet, dass** die Bänder (17), die supraleitendes Material aufweisen, vom Metallmatrix/Multifilament-Typ sind.

8. Verfahren nach einem der voranstehenden Ansprüche, **dadurch gekennzeichnet, dass** das supraleitende Material vom BSCCO-Typ ist.

9. Supraleitendes Leiterelement (31), das zumindest eine Schicht (5; 14, 15) aus Bändern (17) aufweist, die supraleitendes Material aufweisen, das um ein im wesentliches rohrförmiges Halterungselement (4) herum angeordnet ist, wobei die Bänder (17) jeder Schicht (5, 14, 15) voneinander beabstandet sind, **dadurch gekennzeichnet, dass** die Bänder (17) eine derartige gegenseitige Entfernung (D, D') aufweisen, dass der Spalt (G) zwischen dem supraleitenden Material (19) benachbarter Bänder (17a, 17b) nicht kleiner ist als 1,2 mm.

10. Supraleitendes Leiterelement (31) nach Anspruch 9, **dadurch gekennzeichnet, dass** der Spalt (G) einen vorbestimmten Minimalwert von 1,4 mm aufweist.

11. Supraleitendes Leiterelement (31) nach Anspruch 9, **dadurch gekennzeichnet, dass** der Spalt (G) einen vorbestimmten Minimalwert von 2 mm aufweist.

12. Supraleitendes Leiterelement (31) nach einem der Ansprüche 9 bis 11, **dadurch gekennzeichnet, dass** zwei bis zehn Schichten (14, 15) aus Bändern (17) vorgesehen sind, die supraleitendes Material aufweisen.

13. Supraleitendes Leiterelement nach Anspruch 12, **dadurch gekennzeichnet, dass** die Bänder (17) jeder Schicht (14, 15) helixförmig um das Halterungselement (4) gewickelt sind, wobei die Bänder (17) zumindest zweier benachbarter Schichten (14, 15) in entgegengesetzten Richtungen gewickelt sind.

14. Supraleitendes Leiterelement nach einem der Ansprüche 9 bis 13, **dadurch gekennzeichnet, dass** die Bänder (17), die supraleitendes Material aufweisen, vom Metallmatrix/Multifilament-Typ sind.

15. Supraleitendes Leiterelement nach Anspruch 14, **dadurch gekennzeichnet, dass** das supraleitende Material vom BSCCO-Typ ist.

16. Element (3a, 3b, 3c) mit einer supraleitenden Phase und einem warmen Dielektrikum, das ein supraleitendes Leiterelement (31) nach einem der Ansprüche 9 bis 15 aufweist.

17. Supraleitendes Kabel (1) mit warmem Dielektrikum, das zumindest ein Element (3a, 3b, 3c) mit einer supraleitenden Phase nach Anspruch 16 aufweist.

18. Supraleitendes Kabel (1) nach Anspruch 17, **dadurch gekennzeichnet, dass** es ein Dreiphasen-Kabel ist.

## Revendications

1. Procédé de réduction des pertes de courant alternatif dans un élément conducteur supraconducteur (31) soumis à un champ magnétique extérieur et dans lequel circule un courant, comprenant les étapes consistant à :
(a) prendre un élément de support sensiblement tubulaire (4),
(b) placer une pluralité de bandes (17) comprenant du matériau supraconducteur en au moins une couche (5 ; 14, 15) autour de l'élément de support (4), les bandes (17) de chaque couche étant maintenues à une distance mutuelle (D) telle que l'espace (G) entre le matériau supraconducteur (19) des bandes voisines (17a, 17b) n'est pas inférieur à une valeur minimum prédéterminée.

2. Procédé selon la revendication 1, **caractérisé en ce que** la valeur minimum prédéterminée est de 1,2 millimètres.

3. Procédé selon la revendication 2, **caractérisé en ce que** la valeur minimum prédéterminée est de 1,4 millimètres.

4. Procédé selon la revendication 3, **caractérisé en ce que** la valeur minimum prédéterminée est de 2 millimètres.

5. Procédé selon l'une quelconque des revendications précédentes, **caractérisé en ce que** les bandes (17) comprenant du matériau supraconducteur sont agencées en un nombre de couches compris entre 2 et 10.

6. Procédé selon la revendication 5, **caractérisé en ce que** l'étape (b) consistant à placer les bandes (17) est exécutée en enroulant les bandes (17) de chaque couche (14, 15) en hélice autour de l'élément de support (4), les bandes (17) d'au moins deux couches voisines (14, 15) étant enroulées dans des directions opposées.

7. Procédé selon l'une quelconque des revendications précédentes, **caractérisé en ce que** les bandes (17) comprenant du matériau supraconducteur sont du type multifilamentaire à matrice métallique.

8. Procédé selon la revendication 7, **caractérisé en ce que** le matériau supraconducteur est de type BSCCO.

9. Elément conducteur supraconducteur (31), comprenant au moins une couche (5 ; 14, 15) de bandes (17) comprenant du matériau supraconducteur, placées autour d'un élément de support sensiblement tubulaire (4), les bandes (17) de chaque couche (5, 14, 15) étant mutuellement espacées, **caractérisé en ce que** les bandes (17) ont une distance mutuelle (D, D') telle que l'espace (G) entre le matériau supraconducteur (19) des bandes voisines (17a, 17b) n'est pas inférieur à 1,2 millimètres.

10. Elément conducteur supraconducteur (31) selon la revendication 9, **caractérisé en ce que** l'espace (G) a une valeur minimum prédéterminée de 1,4 millimètres.

11. Elément conducteur supraconducteur selon la revendication 10, **caractérisé en ce que** l'espace (G) a une valeur minimum prédéterminée de 2 millimètres.

12. Elément conducteur supraconducteur selon l'une quelconque des revendications 9 à 11, **caractérisé en ce qu'**il comprend de 2 à 10 couches (14, 15) de bandes (17) comprenant du matériau supraconducteur.

13. Elément conducteur supraconducteur selon la revendication 12, **caractérisé en ce que** les bandes (17) de chaque couche (14, 15) sont enroulées en hélice autour de l'élément de support (4), les bandes (17) d'au moins deux couches voisines (14, 15) étant enroulées dans des directions opposées.

14. Elément conducteur supraconducteur selon l'une quelconque des revendications 9 à 13, **caractérisé en ce que** les bandes (17) comprenant du matériau supraconducteur sont du type multifilamentaire à matrice métallique.

15. Elément conducteur supraconducteur selon la revendication 14, **caractérisé en ce que** le matériau supraconducteur est de type BSCCO.

16. Elément de phase supraconducteur à diéléctrique chaud (3a, 3b, 3c) comprenant un élément conducteur supraconducteur (31) conforme à l'une quelconque des revendications 9 à 15.

17. Câble supraconducteur à diélectrique chaud (1) comprenant au moins un élément de phase supraconducteur (3a, 3b, 3c) conforme à la revendication 16.

18. Câble supraconducteur (1) selon la revendication 17, **caractérisé par le fait qu'**il est un câble à trois phases.
